# EUROPÄISCHE PATENTANMELDUNG

(11) **EP 1 287 930 A1**
(43) Veröffentlichungstag der Anmeldung: **05.03.2003**
(21) Anmeldenummer: 02019361.1
(22) Anmeldetag: 29.08.2002
(51) Int. Cl.: B23B 29/034, B23B 27/06

(54) **Wirbelkopf**

(30) Priorität: 04.09.2001 DE 10143301
(71) Anmelder: Leistritz Produktionstechnik GmbH, 90459 Nürnberg (DE)
(72) Erfinder: Moser, Werner, Dr., 90530 Wendelstein (DE); Richter, Helmut, 90587 Obermichelbach (DE); Seeberger, Manfred, 91091 Grossenseebach (DE)
(74) Vertreter: Matschkur, Lindner Blaumeier Patent- und Rechtsanwälte

(57) **Zusammenfassung**

Wirbelkopf zum Wirbeln bzw. Schälen von Innengewinden und -profilen mit einer Spannaufnahme für ein radial überstehendes auswechselbar in einer Haltertasche gehaltertes Hartmetall-Schälwerkzeug (5,5'), wobei das Schälwerkzeug (5,5') als langgestreckter, vielfach nachschleifbarer stabförmiger Hartmetallkörper, vorzugweise mit einer auf die Schneidfläche aufdiffundierten CBN-Schicht, gegenüberliegende Schnittdruckabstützfläche (12,13,12',13') von der Auflagefläche der vorzugsweise als Querdurchbruch (4) ausgebildeten Haltertasche bis zum radial inneren Ende abgestützt ist und das durch Gewindestifte (17) oder dergleichen radial anstellbar ist.

## Beschreibung

Die Erfindung bezieht sich auf einen Wirbelkopf zum Wirbeln bzw. Schälen von Innengewinden und -profilen mit einer Spannaufnahme für ein radial überstehendes auswechselbar in einer Haltertasche gehaltertes Hartmetall-Schälwerkzeug.

Abgesehen von gelöteten Schälwerkzeugen, die beim Abnutzen der Schneiden sehr aufwendig ausgetauscht werden müssen, werden die Schälwerkzeuge üblicherweise mittels einer Spannpratze klemmend gehaltert, wobei es zur Erhöhung der Standzeit eines Schälwerkzeugs auch häufig vorgeschlagen wird Mehrschneidenschälwerkzeuge, wie Wendeplatten oder dergleichen einzusetzen. Die Klemmhalterung ist dabei sehr hochbauend und gerade für schlanke Profilwerkzeuge häufig weniger geeignet.

Auch ein in der JP 57168831AA vorgeschlagener Wirbelkopf zeigt keine Möglichkeit eines einfachen Nachstellens des Schälwerkzeugs. Stattdessen ist dort vorgesehen, dass der gesamte Halterungsteil des Schälwerkzeugs gegenüber dem Wirbelkopf axial verstellbar ist.

Der Erfindung liegt daher die Aufgabe zugrunde einen Wirbelkopf der eingangs genannten Art so auszugestalten, dass bei einfacher kleinbauender Klemmhalterung eine verbesserte Werkzeugwirtschaftlichkeit erzielbar ist.

Zur Lösung dieser Aufgabe ist erfindungsgemäß vorgesehen, dass das Schälwerkzeug als langgestreckter, vielfach nachschleifbarer, stabförmiger Hartmetallkörper ausgebildet ist, dessen der Schneidfläche gegenüberliegende Schnittdruckabstützfläche von der Auflagefläche der als Querdurchbruch ausgebildeten Haltertasche bis zum radial inneren Ende abgestützt ist und das durch einen Gewindestift radial anstellbar ist.

Durch die erfindungsgemäße Ausbildung, bei der durch die Unterstützung des Schälwerkzeugs über die gesamte Schnittdruckabstützfläche sehr niedrig bauende Schälwerkzeuge mit einer Höhe von nur ca. 2 - 5 mm einsetzbar sind, ergibt sich Möglichkeit die Haltertasche als einen umlaufend geschlossenen Durchbruch des Wirbelkopfs auszubilden. Die langgestreckte Ausbildung der Hartmetallkörper der Schälwerkzeuge in Verbindung mit einer nahezu vollflächigen Beschichtung mit CBN lässt es zu, dass solche Schälwerkzeuge bis zu zwanzig mal und mehr nachgeschliffen werden können, wodurch sich die Werkzeugkosten im Einsatz stark verringern. In Weiterbildung der Erfindung kann dabei vorgesehen sein, dass der im Wesentlichen parallel zur Verstellrichtung des Schälwerkzeugs angeordnete Gewindestift das Schälwerkzeug mit der Schulter eines erweiterten Kopfabschnitts hintergreift.

Im einfachsten Fall kann die Ausbildung so getroffen sein, dass das Schälwerkzeug durch ein auf der CBN-Schicht angreifendes Spannelement gehaltert und durch im Wesentlichen 90° dagegen versetzte Andruckelemente an die seitliche Anlagefläche der Haltertasche andrückbar ist.

Mit besonderem Vorteil kann aber auch vorgesehen sein, dass die Schnittdruckabstützfläche des über ein auf der CBN-Schicht angreifendes Spannelement gehalterten Schälwerkzeugs dachkantartig ausgebildet ist und dass die Auflagefläche der Haltertasche einer der Teilflächen parallel anliegend geneigt ausgebildet ist, so dass durch das Spannelement gleichzeitig auch das Andrücken an die Anlagefläche erreicht wird. Bei dieser Ausbildung braucht man also keine gesonderten Andruckelemente.

Das Spannelement kann im einfachsten Fall ein Zugbolzen sein, der mit einem Keilkopf auf der CBN-Schicht angreift, wobei mit besonderem Vorteil der Keilkopf ein mit einer Keil-Abflachung versehener Zylinderkopf ist, dessen schräg geneigte Aufnahmedurchbrechung im Wirbelkopf zur Haltertasche hin offen ist.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: eine Seitenansicht einer ersten Ausführungsform eines erfindungsgemäßen Wirbelkopfs,
- Fig. 2: einen Schnitt längs der Linie II - II durch den Wirbelkopf nach Fig. 1,
- Fig. 3: einen Schnitt längs der Linie III - III in Fig. 1,
- Fig. 4: eine der Fig. 1 entsprechende Seitenansicht einer zweiten Ausführungsform eines erfindungsgemäßen Wirbelkopfs,
- Fig. 5: eine 90° gegenüber Fig. 4 versetzte Draufsicht und
- Fig. 6: einen Schnitt längs der Linie VI - VI in Fig. 4.

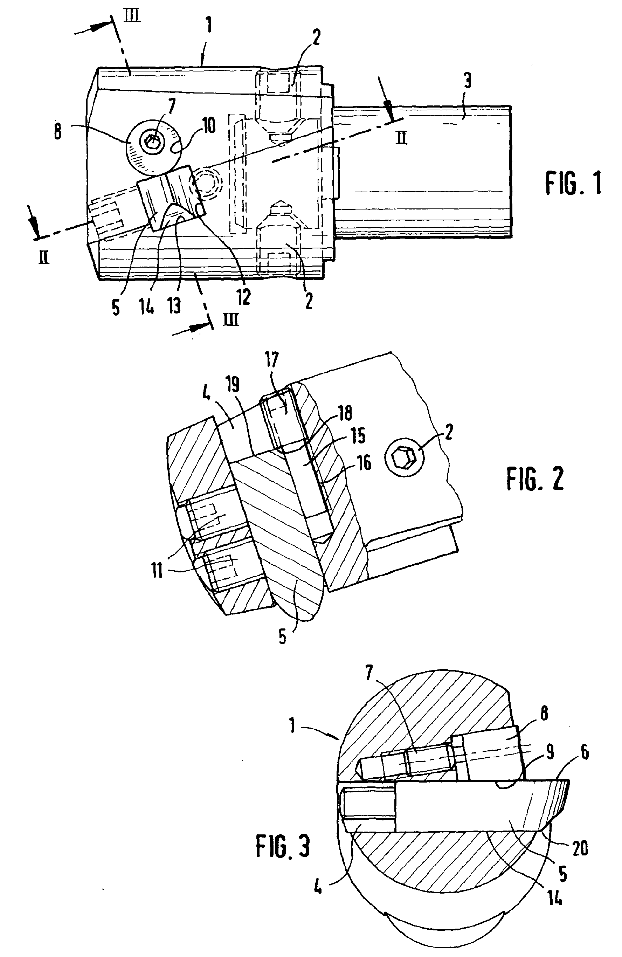

Der in den Fig. 1 - 3 gezeigte Wirbelkopf 1 wird mit Hilfe von Spannschrauben 2 auf der Welle 3 der Wirbelmaschine befestigt. Im Wirbelkopf 1 ist ein prismatischer Durchbruch 4 zur Aufnahme eines langgestreckten Schälwerkzeugs 5 angeordnet, wobei das Schälwerkzeug als vielfach nachschleifbarer Hartmetallgrundkörper, vorzugsweise mit einer auf die Schneidfläche 6 aufgebrachten CBN-Beschichtung, ausgebildet ist. Zum Haltern des Schälwerkzeugs 5 dient ein Spannelement in Form eines Zugbolzens 7, dessen Keilkopf 8 auf der CBN-Schicht der Schneidfläche 6 angreift. Der Keilkopf ist dabei ein Zylinderkopf mit einer Keilabflachung 9, dessen schräg geneigte Aufnahmeöffnung im Wirbelkopf 1 zur Haltertasche 4 hin offen ist. Das Schälwerkzeug mit einer Höhe von bevorzugt etwa 2 - 5 mm und mit einer vollflächigen CBN-Beschichtung der Schnittfläche 6 wird im Ausführungsbeispiel nach den Fig. 1 - 3 durch Andruckelemente 11 an die seitliche Anlagefläche 12 der Haltertasche 4 angedrückt, da ein spielfreier Sitz in der Haltertasche nicht erzielbar ist und auf diese Art und Weise eine exakte Festlegung der Schälwerkzeugposition erreicht werden kann.

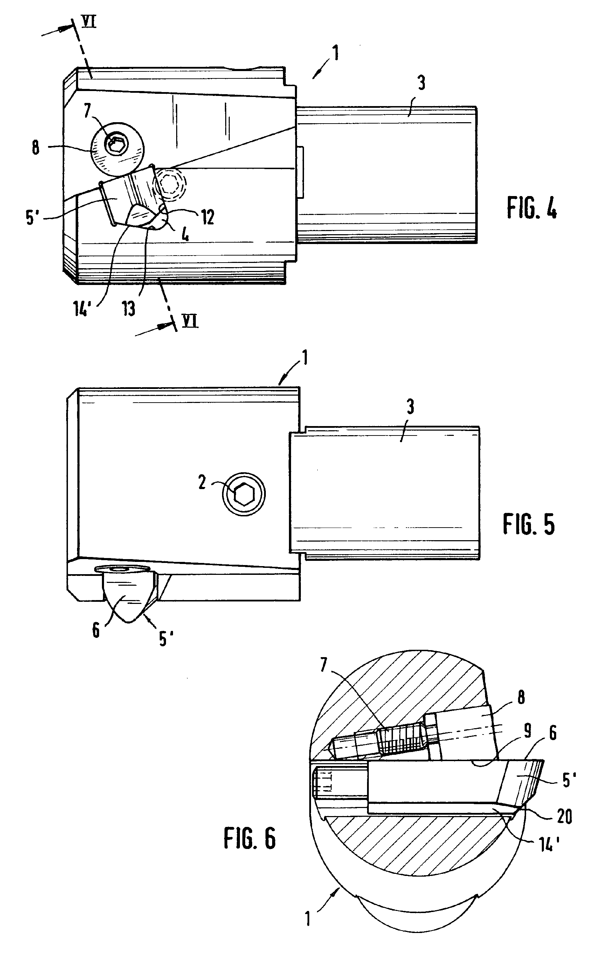

Beim Ausführungsbeispiel nach Fig. 4 - 6 ist die Haltertasche 4 mit einer zur Anlagefläche 12 hin geneigten Auflagefläche 13 versehen und die Schnittdruckabstützfläche 14 ist dachkantartig ausgebildet, so das die eine Teilfläche parallel auf der Auflagefläche 13 aufliegt. Dies hat zur Folge, dass durch die Spannkraft des Zugbolzens 7 mit dem Keilkopf 8 eine Kraftumleitung stattfindet. Das Schälwerkzeug 5' gleitet auf der Auflagefläche zur Anlagefläche 12 hin. Durch diese Ausbildung sind also die gesonderten Andruckelemente 11 wie beim Ausführungsbeispiel nach den Fig. 1 - 3 entbehrlich.

Bei beiden Ausführungsformen erfolgt das Anstellen des Schälwerkzeugs 5, 5' in radialer Richtung durch einen Gewindestift 15, der in einer Gewindebohrung 16 parallel zur Haltertasche 4 einschraubbar ist, wobei der Gewindestift einen verbreiterten Kopf 17 aufweist, der eine Durchbrechung der Gewindebohrung zur Haltertasche hin durchsetzend mit einer Schulter 18 an Rückfläche 19 des Schälwerkzeugs 5, 5' angreift. Diese Art der radialen Anstellung über einen Gewindestift ermöglicht sehr große Verstellwege, so dass es auch möglich ist, das Schälwerkzeug 5, 5' sehr häufig, oft sogar über zwanzig mal, nachzuschleifen.

Von Bedeutung ist die vollflächige Auflage der Schnittdruckabstützfläche 14, 14' bis zum radial inneren Ende 20 hin, da hierdurch sehr geringe Bauhöhen des Schälwerkzeugs von nur 2 - 5 mm ausreichende Festigkeit gegenüber den Schnittdruckbelastungen gewährleisten.

## Patentansprüche

1. Wirbelkopf zum Wirbeln bzw. Schälen von Innengewinden und -profilen mit einer Spannaufnahme für ein radial überstehendes auswechselbar in einer Haltertasche gehaltertes Hartmetall-Schälwerkzeug, **dadurch gekennzeichnet, dass** das Schälwerkzeug (5, 5') als langgestreckter, vielfach nachschleifbarer stabförmiger Hartmetallkörper ausgebildet ist, dessen der Schneidfläche (6) gegenüberliegende Schnittdruckabstützfläche (14, 14') von der Auflagefläche (13) der als Querdurchbruch ausgebildeten Haltertasche (4) bis zum radial inneren Ende abgestützt ist und das durch einen Gewindestift (15) radial anstellbar ist.

2. Wirbelkopf nach Anspruch 1, **dadurch gekennzeichnet, dass** auf die Schneidfläche (6) eine CBN-Schicht aufdiffundiert ist.

3. Wirbelkopf nach Anspruch 1 oder 2, **dadurch gekennzeichnet, dass** der im Wesentlichen parallel zur Verstellrichtung des Schälwerkzeugs (5, 5') angeordnete Gewindestift (15) das Schälwerkzeug mit der Schulter (18) eines erweiterten Kopfabschnitts (17) hintergreift.

4. Wirbelkopf nach einem der Ansprüche 1 bis 3, **dadurch gekennzeichnet, dass** das Schälwerkzeug (5) durch ein auf der CBN-Schicht angreifendes Spannelement gehaltert und durch ein im Wesentlichen 90° dagegen versetzte Andruckelemente (11) an die seitliche Anlagefläche (12) der Haltertasche (4) andrückbar ist.

5. Wirbelkopf nach einem der Ansprüche 1 bis 3, **dadurch gekennzeichnet, dass** die Schnittdruckabstützfläche (14') des über ein auf der CBN-Schicht angreifendes Spannelement gehalterten Schälwerkzeugs (5') dachkantartig ausgebildet ist und dass die Auflagefläche (13) der Haltertasche (4) einer der Teilflächen der Schnittdruckabstützfläche (14') parallel anliegend geneigt ausgebildet ist.

6. Wirbelkopf nach Anspruch 4 oder 5, **dadurch gekennzeichnet, dass** das Spannelement ein Zugbolzen (7) ist, der mit einem Keilkopf (8) auf der CBN-Schicht angreift.

7. Wirbelkopf nach Anspruch 6, **dadurch gekennzeichnet, dass** der Keilkopf (8) ein mit einer Keil-Abflachung (9) versehener Zylinderkopf ist, dessen schräg geneigte Aufnahmedurchbrechung (10) im Wirbelkopf (1) zur Haltertasche (4) hin offen ist.

8. Wirbelkopf nach einem der Ansprüche 1 bis 7, **dadurch gekennzeichnet, dass** das Schälwerkzeug (5, 5') eine Höhe von 2 - 5 mm besitzt, wobei die Schnittfläche (6) im Wesentlichen vollständig mit CBN beschichtet ist.
